# EUROPÄISCHE PATENTSCHRIFT

(11) **EP 2 520 479 B1**
(45) Veröffentlichungstag und Bekanntmachung des Hinweises auf die Patenterteilung: **04.04.2018**
(21) Anmeldenummer: 12163914.0
(22) Anmeldetag: 12.04.2012
(51) Int. Cl.: B62L 3/02, B60T 11/22, B60T 17/04

(54) **Geber für ein hydraulisches Betätigungselement**
Transmitter for a hydraulic actuation element
Transmetteur pour un élément d'actionnement hydraulique

(30) Priorität: 03.05.2011 DE 102011075186
(43) Veröffentlichungstag der Anmeldung: 07.11.2012
(60) Teilanmeldung: 15188929.2
(73) Patentinhaber: Gustav Magenwirth GmbH & Co. KG, 72574 Bad Urach (DE)
(72) Erfinder: Schmauder, Werner, 72584 Hülben (DE)
(74) Vertreter: Friese Goeden Patentanwälte PartGmbB

(56) Entgegenhaltungen:
- EP-A2- 2 147 853
- DE-A1- 3 544 167
- DE-A1-102009 039 620
- DE-T2- 60 023 263
- DE-T2- 60 104 447
- DE-T2- 69 405 880
- DE-U1- 20 111 971
- JP-A- S5 539 872
- JP-A- H09 263 281
- US-A- 3 802 200
- US-A- 4 823 553

## Beschreibung

Die Erfindung betrifft einen Geber für ein hydraulisches Betätigungselement, mit einem Zylinder, in welchem ein Kolben verschiebbar gelagert ist, und einem Handhebel, mit welchem die Lage des Kolbens im Zylinder beeinflusst werden kann.

Aus der DE 10 2004 044 733 A1 ist ein Geber der eingangs genannten Art bekannt. Dieser Geber weist jedoch eine Reihe von Nachteilen auf. Das Gehäuse des Gebers ist aus einem Metall oder einer Legierung gefertigt und daher ist die Fertigung des Gebers aufwendig und teuer. Weiterhin kann der Lenkeinschlag des Fahrzeuges, beispielsweise eines Motorrades, durch die den Geber und den Nehmer verbindende Hydraulikleitung eingeschränkt sein. Schließlich erfordert die Entlüftung des Hydrauliksystems einen erheblichen Aufwand. Sofern dabei nicht sorgfältig gearbeitet wird, können leicht Lufteinschlüsse im Hydrauliksystem verbleiben und/oder Schmutzpartikel eingebracht werden.

Die DE 600 23 263 T2 offenbart einen Geber gemäß dem Oberbegriff von Anspruch 1 für ein Fahrzeug mit Lenkstange auf, bei welchem der Kolben eines Hydraulikgebers über einen Schwenkhebel betätigt wird. Der Schwenkhebel selbst wird vom Bediener über einen Handhebel betätigt, wobei ein Exzenterelement erlaubt, unterschiedliche Abstände zwischen Schwenkhebel und Handhebel einzustellen. Dieser bekannte Geber weist jedoch den Nachteil auf, dass der Exzenter frei rotierbar ist und daher eine ungewollte Verstellung eintreten kann.

Auch die JP H09-263281 zeigt einen Geber für ein lenkergeführtes Fahrzeug. Auch dieser bekannte Geber weist ein frei rotierbares Exzenterelement auf, mit welchem die Griffweite eingestellt werden kann. Eine ungewollte Verstellung wird nur durch die Anlagefläche des Exzenters vermieden, welcher primär zur Griffweiteneinstellung dient.

Der Erfindung liegt somit die Aufgabe zugrunde, die genannten Nachteile zu überwinden.

Die Aufgabe wird erfindungsgemäß durch einen Geber gemäß Anspruch 1, ein Brems- oder Kupplungssystem gemäß Anspruch 11 und ein Fahrzeug gemäß Anspruch 12 gelöst.

Der vorgeschlagene Geber enthält zumindest einen Kolben, welcher in einer Zylinderbohrung verschiebbar gelagert ist. Die Zylinderbohrung ist dabei in einem Zylindergehäuse ausgebildet. Durch das Verschieben des Kolbens wird das eingeschlossene Volumen der Zylinderbohrung größer oder kleiner. Dadurch kann ein in der Zylinderbohrung befindliches Hydraulikfluid aus der Zylinderbohrung verdrängt und/oder mit einem statischen Druck beaufschlagt werden.

Die Zylinderbohrung ist mit einer Hydraulikleitung verbunden, welche den auf das Hydraulikfluid ausgeübten Druck einem Nehmerzylinder zuführt. Damit kann der Nehmerzylinder ein hydraulisches Betätigungselement bedienen, beispielsweise eine Bremse, ein Getriebe oder eine Kupplung.

Das Zylindergehäuse kann neben der Zylinderbohrung weitere mechanische und/oder hydraulische Komponenten tragen, beispielsweise eine Befestigungsvorrichtung zur Befestigung am Fahrzeug, ein Anschlusselement für zumindest eine Hydraulikleitung, einen elektrischen Schalter zur gleichzeitigen Aktivierung eines hydraulischen und eines elektrischen Stellgliedes bzw. Gerätes oder ein Schwenklager für einen Hand- oder Fußhebel.

In einigen Ausführungsformen kann das Zylindergehäuse zumindest teilweise aus einem Kunststoffmaterial gefertigt sein. Das Kunststoffmaterial kann einen Thermoplast oder ein Duroplast enthalten oder daraus bestehen. In einigen Ausführungsformen kann das Kunststoffmaterial Glasfasern und/oder Kohlefasern und/oder Aramidfasern enthalten, um die mechanische Festigkeit des Zylindergehäuses zu erhöhen. Die Fasern können als Wirrfasern oder als Geflecht in das Kunststoffmaterial eingelegt werden. In einigen Ausführungsformen kann das Zylindergehäuse zumindest teilweise im Handauflegeverfahren und/oder als Spritzgussteil gefertigt werden. Ein solches Zylindergehäuse kann leichter und/oder steifer sein als ein an sich bekanntes Zylindergehäuse aus einem Metall oder einer Legierung. Sofern das Zylindergehäuse in einem Spritzgußverfahren erhalten wird, kann die Standzeit des Werkzeuges größer sein als bei einem Metallgußverfahren.

Zumindest ein mechanisch belasteter Teil des Zylindergehäuses ist kann doppelwandig ausgeführt sein, d.h. der entsprechende Bereich des Zylindergehäuses weist eine Innenwand und eine Außenwand auf. Hierdurch werden die Nachteile großer Wandstärken vermieden, wie beispielsweise Gewichtserhöhung und/oder Lunkerbildung mit entsprechender Abnahme der Festigkeit. Durch die doppelwandige Ausführung von zumindest einem Teil bzw. einem vorgebbaren Raumbereich des Zylindergehäuses kann eine glattflächige, dekorative Außenform des Zylindergehäuses bzw. eines Teiles davon erhalten werden und gleichzeitig die Festigkeit gegenüber einer dünnen einwandigen Ausführung erhöht werden.

Der Teil bzw. der Raumbereich des Zylindergehäuses, welcher doppelwandig ausgeführt ist, kann in einigen Ausführungsformen durch Versuch und/oder Festigkeitsrechnung und/oder Finite-Element-Methoden bestimmt werden. Der doppelwandige Raumbereich kann in einigen Ausführungsformen einen die Zylinderbohrung umgebenden Raumbereich des Zylindergehäuses und/oder zumindest einen Teil eines Befestigungselementes und/oder zumindest einen zur Aufnahme eines mechanischen Betätigungselementes bestimmten Teil des Zylindergehäuses umfassen.

Erfindungsgemäß enthält der Geber weiterhin einen Handhebel, mit welchem die Lage des Kolbens in der Zylinderbohrung beeinflusst werden kann, und/oder ein Befestigungselement zur Befestigung des Gebers am Lenker eines lenkergeführten Fahrzeuges. Der Handhebel kann in einem Schwenklager am Zylindergehäuse gelagert sein. Auf diese Weise kann das hydraulische Betätigungselement, beispielsweise ein Bremssystem oder ein Kupplungssystem, vom Benutzer eines lenkergeführten Fahrzeuges durch Betätigung des Handhebels bedient werden. Das lenkergeführte Fahrzeug kann in einigen Ausführungsformen der Erfindung ein Motorrad, ein Schneemobil oder ein Quad sein.

In einigen Ausführungsformen enthält der Geber weiterhin zumindest einen Steg, welcher die Innenwand mit der Außenwand verbindet. Auf diese Weise können Kräfte bzw. mechanische Spannungen zwischen der Innen- und der Außenwand übertragen werden. Dies führt zu einer größeren mechanischen Stabilität des Gebers bzw. des Zylindergehäuses ohne den Vorteil einer glattflächigen Innen- und/oder Außenfläche zu verlieren und ohne die Nachteile einer großen Wandstärke in Kauf nehmen zu müssen.

In einigen Ausführungsformen enthält der Geber weiterhin zumindest eine Verrippung am Zylindergehäuse. Die Verrippung kann zur Erhöhung der mechanischen Stabilität zumindest eines Teils des Zylindergehäuses führen. Die Verrippung kann entweder auf der Innenseite eines Hohlraumes und/oder auf einer in der normalen Einbaulage nicht sichtbaren Unterseite angeordnet sein. Auch eine solche Verrippung kann dazu dienen, die Wandstärke des Zylindergehäuses zu reduzieren, damit der Bildung von Lunkern vorzubeugen und Gewicht einzusparen und dennoch eine erhöhte Festigkeit zu erreichen. Sofern eine Gewindebuchse im Bereich der Verrippung angeordnet ist, kann diese eine Schraube bzw. einen Gewindebolzen aufnehmen und Kräfte einer Schraubverbindung in das Zylindergehäuse einleiten. In einigen Ausführungsformen kann die Gewindebuchse Teil eines Befestigungselementes zur Befestigung des Gebers am Fahrzeug und/oder Teil eines Schwenklagers zur Aufnahme des Handhebels am Zylindergehäuse sein.

In einigen Ausführungsformen kann das Befestigungselement zur Befestigung des Gebers an einem Fahrzeug, insbesondere am Lenker eines lenkergeführten Fahrzeuges, zumindest eine Mutter enthalten, in welcher eine Schraube durch eine erste Bohrung im Zylindergehäuse einschraubbar ist, wobei die Mutter durch einen quer zur Bohrung verlaufenden Schacht einführbar und dort mit einer Verliersicherung festlegbar ist. Gemäß dieser Ausführungsform wird vorgeschlagen, eine Schraube bzw. einen Gewindebolzen durch eine Bohrung im Zylindergehäuse zu führen und dort in eine Mutter aus einem Metall oder einer Legierung einzuführen. Dies vermeidet die Notwendigkeit, im Kunststoffmaterial des Zylindergehäuses ein Gewinde vorzusehen, welches eine geringere mechanische Festigkeit aufweisen kann als ein Gewinde in einem metallischen Werkstoff. Die Bohrung weist dabei einen kleineren Querschnitt auf als der äußere Querschnitt der Mutter, sodass die Mutter eine Haltekraft auf das Zylindergehäuse übertragen kann. Um die Mutter in ihre Einbauposition zu bringen, kann diese durch einen in etwa quer zur Bohrung verlaufenden Schacht eingeführt werden. Der Schacht kann in einigen Ausführungsformen einen Winkel zwischen etwa 70° und etwa 110° zur Bohrung einschließen. Der Schacht verläuft zumindest bis zur Bohrung und in einigen Ausführungsformen genau bis zur Bohrung. Dies bewirkt, dass die Mutter am Ende des Schachtes so positioniert ist, dass ihr Gewinde in Verlängerung der Bohrung zu liegen kommt. In einigen Ausführungsformen kann die Mutter formschlüssig im Schacht anliegen, d.h. die Mutter liegt zumindest teilweise an den Begrenzungswänden des Schachtes an, so dass ein auf die Mutter ausgeübtes Drehmoment über den Schacht auf das Zylindergehäuse übertragen werden kann.

In einigen Ausführungsformen kann die Mutter mit einer Verliersicherung festlegbar sein, d.h. die Mutter kann aus dem Schacht nicht herausfallen, sodass der Geber einfach transportiert und montiert werden kann.

In einigen Ausführungsformen kann die Verliersicherung zumindest einen Zapfen umfassen, welcher einstückig mit dem Zylindergehäuse verbunden und durch Warmverformen von einer Einführposition in eine Verriegelungsposition bringbar ist. In diesem Fall kann der Zapfen bei der Fertigung des Zylindergehäuses angeformt werden, beispielsweise in einem Spritzgussverfahren. Nachdem die Mutter in den Schacht eingeführt ist, kann das Zylindergehäuse oder zumindest ein Teil des Zapfens erwärmt und so verformt werden, dass dieser den Schacht zumindest teilweise verlegt. Auf diese Weise wird das Herausfallen der Mutter zuverlässig verhindert.

In einer anderen Ausführungsform kann die Verliersicherung zumindest ein elastisches Element umfassen, welches im Schacht angeordnet ist und eine Klemmkraft auf die Mutter ausübt. Das elastische Element kann ebenfalls bei der Fertigung des Zylindergehäuses im Schacht ausgebildet werden und/oder durch Schweißen, Kleben oder Klemmen im Schacht befestigt sein. In anderen Ausführungsformen kann ein elastisches Element an der Mutter befestigt werden, sodass diese mit einem strengen Schiebesitz in den Schacht einführbar ist. In diesem Fall kann sich der Querschnitt des Schachtes von seiner Mündung zum Ende hin verjüngen, sodass die Mutter in einfacher Weise eingeführt werden kann und dennoch in ihrer Endposition sicher gehalten wird.

In einigen Ausführungsformen kann am Zylindergehäuse ein Leitungsanschluss für eine Hydraulikleitung angeordnet sein, sodass ein Hydraulikfluid bei Bewegung des Kolbens von der Zylinderbohrung in die Hydraulikleitung strömen kann, wobei die Hydraulikleitung um ihre Längsachse drehbar ist. Ein solcher drehbarer Anschluss ermöglicht es der Hydraulikleitung, dem Lenkeinschlag zu folgen und damit den Lenkeinschlag nicht zu behindern. Dadurch können geringere Lenkkräfte und/oder ein größerer Lenkeinschlag erreicht werden. Weiterhin können Biegekräfte und/oder Torsionskräfte auf die Hydraulikleitung verringert werden, sodass deren Lebensdauer erhöht ist und die Betriebssicherheit des hydraulischen Betätigungselementes erhöht sein kann.

In einigen Ausführungsformen enthält der Geber weiterhin einen Zylinderboden, welcher die Zylinderbohrung begrenzt, wobei im Zylinderboden ein Langloch angeordnet ist, sodass ein Hydraulikfluid bei Bewegung des Kolbens von der Zylinderbohrung durch das Langloch in die Hydraulikleitung strömen kann. Der Zylinderboden kann in einigen Ausführungsformen als Widerlager für ein Federelement verwendet werden, welches auf den Kolben einwirkt und diesen in eine Ruhestellung bewegen kann.

Um das Überströmen des Hydraulikfluides aus der Zylinderbohrung in die Hydraulikleitung zu ermöglichen, weist der Zylinderboden ein Langloch auf. In einigen Ausführungsformen kann das Langloch aus einer Mittelposition nach oben verschoben angeordnet sein. Die relative Ortsangabe "oben" bezieht sich dabei auf die normale Einbauposition des Gebers, sodass Lufteinschlüsse im Hydraulikfluid, welche sich im oberen Bereich der Leitung sammeln, durch das Langloch hindurchtreten können, ohne auf einer Seite des Zylinderbodens eingeschlossen zu werden. Auf diese Weise wird die Entlüftung des Gebers und der Hydraulikleitung vereinfacht.

In einigen Ausführungsformen enthält der Geber weiterhin einen Ausgleichsbehälter, welcher in dem Zylindergehäuse ausgebildet und mit einem Ausgleichsbehälterdeckel verschlossen ist, wobei der Ausgleichsbehälterdeckel durch zumindest eine Schraubverbindung mit dem Zylindergehäuse verbunden ist und die Schraubverbindung eine Schraubenbohrung aufweist, welche durch zumindest einen Überströmkanal mit dem Inneren des Ausgleichsbehälters verbunden ist. Diese Ausführungsform ermöglicht das Nachfüllen von Hydraulikfluid und/oder das Entlüften des Ausgleichsbehälters, ohne dass der Ausgleichsbehälterdeckel abgenommen werden muss. Hierdurch wird die Gefahr des Verschüttens von Hydraulikfluid und/oder die Gefahr des Einbringens von Verunreinigungen verringert.

In einigen Ausführungsformen weist die Schraubenbohrung einen Konussitz auf, an welchem eine Leitung flüssigkeitsdicht aufgesteckt werden kann. In anderen Ausführungsformen weist die Schraubenbohrung ein Innengewinde auf, in welches eine Leitung flüssigkeitsdicht eingeschraubt werden kann. Hierdurch kann Hydraulikfluid in den Ausgleichsbehälter nachgefüllt werden, ohne dass dieses an der Schraubenbohrung austritt und das Zylindergehäuse und/oder das Fahrzeug verunreinigt. Ein Konussitz weist weiterhin den Vorteil auf, dass eine Leitung in einfacher Weise aufgesteckt werden kann und somit schneller und einfacher befestigt werden kann als mit einer Verschraubung.

In einigen Ausführungsformen enthält der Geber weiterhin zumindest ein Anschlagelement und/oder zumindest einen Balg, welche durch einen Sicherungsring im Zylindergehäuse fixiert sind, wobei der Sicherungsring mit einer Außenklemmung im Zylindergehäuse gehalten ist. Das Anschlagelement kann in einigen Ausführungsformen verhindern, dass ein mit einer Federkraft beaufschlagter Kolben aus dem Zylindergehäuse herausfällt. Diese Gefahr besteht insbesondere während der Endmontage, solange ein Betätigungselement, wie beispielsweise ein Handhebel, noch nicht auf den Kolben einwirkt. Ein Balg kann in einigen Ausführungsformen das Eintreten von Feuchtigkeit und/oder Staub und/oder Schmutz und/oder Partikeln aus der Umwelt in die Zylinderbohrung verhindern und damit die Zuverlässigkeit des Gebers weiter erhöhen.

Sowohl ein Anschlagelement als auch ein Balg können durch Schrauben, Kleben oder Pressen mit dem Zylindergehäuse verbunden werden. In einer Ausführungsform werden diese Teile durch zumindest einen Sicherungsring gehalten. Wenn der Sicherungsring mit einer Außenklemmung im Zylindergehäuse gehalten ist, kann dessen Lage variiert werden, um Fertigungstoleranzen auszugleichen. Weiterhin erspart eine solche Außenklemmung das Vorsehen einer Nut, sodass eine Spritzgussform für das Zylindergehäuse einfacher ausgebildet sein kann.

Die Erfindung betrifft einen Geber für ein hydraulisches Betätigungselement, mit einem Handhebel und einem Schwenkhebel und einer Zylinderbohrung, welche in einem Zylindergehäuse ausgebildet ist und in welcher ein Kolben verschiebbar gelagert ist, wobei der Handhebel mit dem Schwenkhebel über ein Verstellelement in Kontakt steht und der Schwenkhebel dazu eingerichtet ist, eine Bewegung des Handhebels auf den Kolben zu übertragen, wobei das Verstellelement einen Exzenter und ein Rastelement aufweist, wobei das Rastelement in unterschiedlichen Stellungen festlegbar und aus einem Kunststoffmaterial gefertigt ist. Hierbei definiert der Exzenter die Griffweite, wobei das Rastelement eine versehentliche, unerwünschte Verstellung während der Fahrt verhindert.

In einigen Ausführungsformen der Erfindung weist das Verstellelement weiterhin ein Bedienelement auf, welches dazu eingerichtet ist, den Exzenter und das Rastelement zu drehen. Dadurch kann die Griffweite leicht eingestellt werden, gegebenenfalls sogar während der Fahrt.

In einigen Ausführungsformen der Erfindung ist das Verstellelement einstückig gefertigt. In einigen Ausführungsformen der Erfindung ist das Verstellelement in einem Spritzgußverfahren gefertig. Dies erlaubt eine einfache Montage und eine rasche und reproduzierbare Fertigung.

In einigen Ausführungsformen der Erfindung ist zumindest ein Teil des Rastelementes aus einem zylindrischen Längsabschnitt des Verstellelementes gebildet, welcher durch einen Schlitz vom verbleibenden Verstellelement freigestellt ist. Ein solches Verstellelement besteht nur aus einem einzigen Bauteil, so dass die aufwändige Montage einer Mehrzahl von Kleinteilen vermieden wird. Der Geber kann dadurch bei der Endmontage einfach zusammengesteckt werden.

In einigen Ausführungsformen der Erfindung weist das Rastelement eine radial veränderliche Wandstärke auf. Dies erlaubt die einstückige Integration eines Federelementes. Erfindungsgemäß weist das Rastelement zumindest eine über den Umfang des Verstellelementes hinausragende Rastnase auf, welche dazu ausgebildet ist, in eine Ausnehmung am Handhebel einzugreifen.

In einigen Ausführungsformen der Erfindung ist im Schlitz ein Anschlagelement angeordnet.

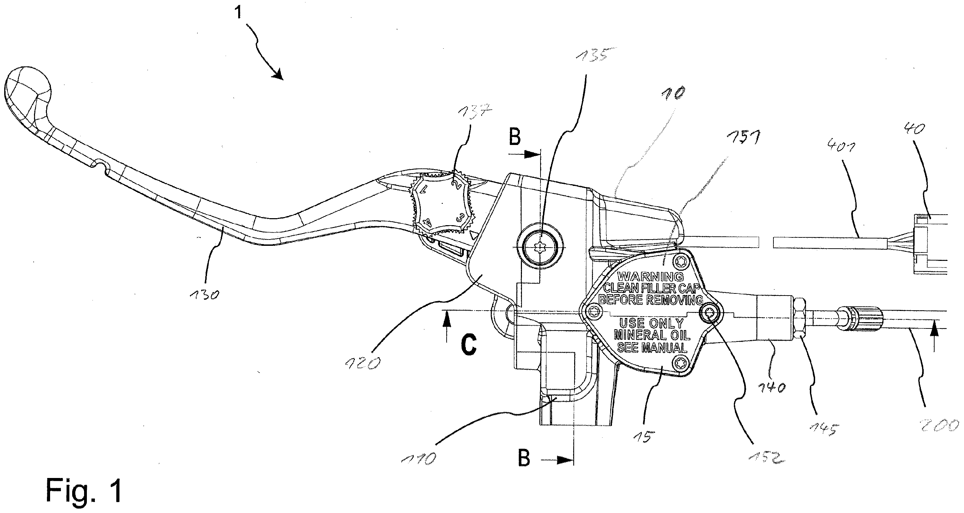

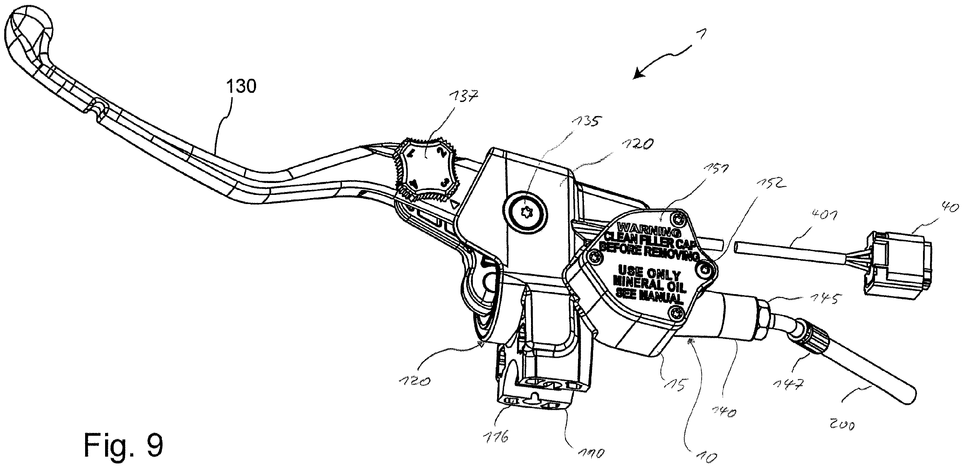

Nachfolgend soll die Erfindung anhand von Figuren ohne Beschränkung des allgemeinen Erfindungsgedankens näher erläutert werden. Dabei zeigt
- Figur 1: die Aufsicht auf einen Geber gemäß der vorliegenden Erfindung.
- Figur 2: zeigt die Unterseite des Gebers.
- Figur 3: zeigt einen Schnitt durch den Ausgleichsbehälter.
- Figur 4: zeigt einen Schnitt durch die Aufnahme des Handhebels.
- Figur 5: zeigt einen Schnitt durch den Kolben und die Verbindung von Kolben und Handhebel.
- Figur 6: zeigt einen Schnitt durch den Anschluss einer Hydraulikleitung.
- Figur 7: zeigt einen Schnitt durch die Zylinderbohrung.
- Figur 8: zeigt einen Schnitt durch das Befestigungselement des Gebers.
- Figur 9: zeigt eine dreidimensionale Darstellung des Gebers.
- Figur 10: zeigt einen Schnitt durch die Griffweitenverstellung des Handhebels.
- Figur 11: zeigt einen Schnitt durch die Aufnahme des Handhebels.
- Figur 12: zeigt eine perspektivische Ansicht des Handhebels in einer ersten Ansicht.
- Figur 13: zeigt eine perspektivische Ansicht des Handhebels in einer zweiten Ansicht.
- Figur 14: zeigt eine erste Ansicht der Griffweitenverstellung.
- Figur 15: zeigt eine zweite Ansicht der Griffweitenverstellung.
Anhand der Figuren 1 und 9 wird eine Ausführungsform der vorliegenden Erfindung näher erläutert. Die Figuren zeigen einen hydraulischen Geber 1, welcher mit einer Befestigungsvorrichtung 110 am Lenker eines lenkergeführten Fahrzeuges befestigt werden kann. Das lenkergeführte Fahrzeug kann beispielsweise ein Schneemobil, ein Quad oder ein Motorrad sein.

Über den Handhebel 130 kann der Fahrer des lenkergeführten Fahrzeuges das hydraulische Betätigungselement betätigen, beispielsweise eine Bremse oder eine Kupplung. Um eine komfortable Betätigung zu ermöglichen, kann der Geber 1 eine optionale Griffweitenverstellung aufweisen, mit welcher der Abstand zwischen dem Lenkerrohr und dem Handhebel 130 einstellbar ist. Im dargestellten Ausführungsbeispiel weist das Bedienelement 137 der Griffweitenverstellung vier Positionen auf. In anderen Ausführungsformen der Erfindung kann die Anzahl der Positionen größer oder geringer sein oder die Griffweitenverstellung kann vollständig entfallen.

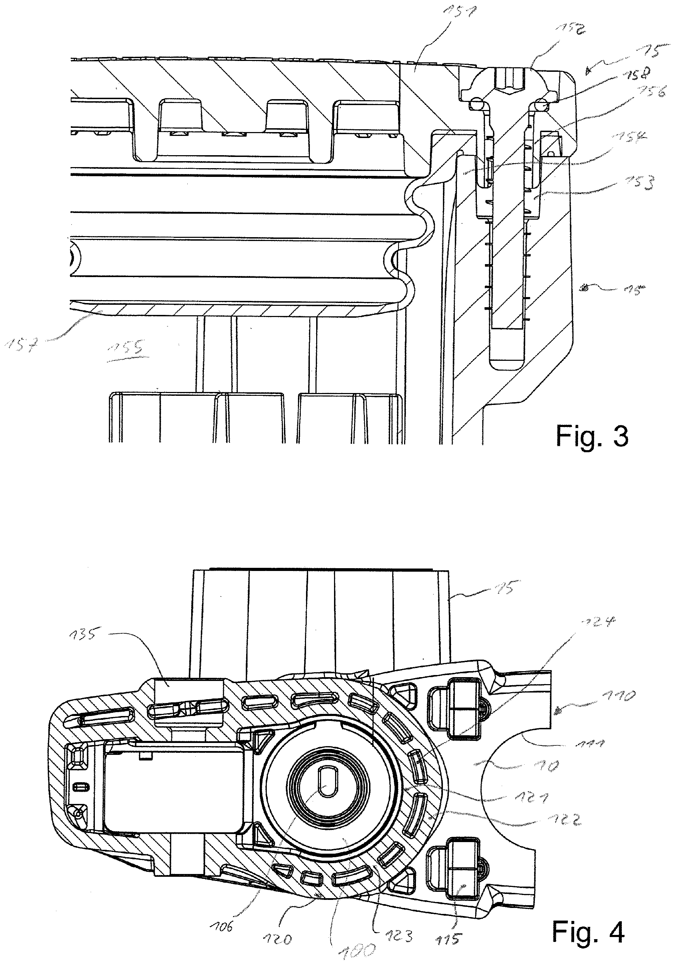

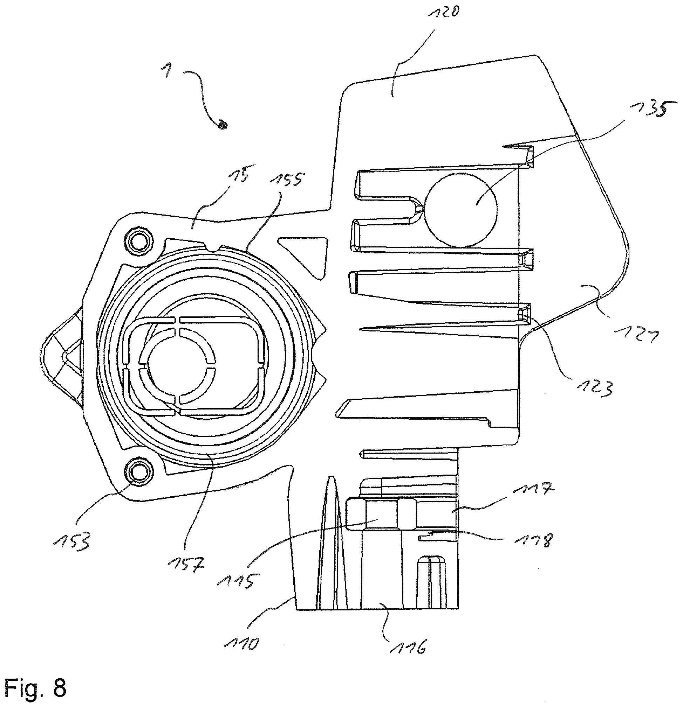

Das Zylindergehäuse 10 ist weiterhin mit einem doppelwandigen Raumbereich 120 ausgestattet, welcher nachfolgend anhand der Figuren 4 und 8 näher erläutert wird. Im dargestellten Ausführungsbeispiel erhöht der doppelwandige Raumbereich 120 die Stabilität des Schwenklagers 135 des Handhebels 130 sowie die Stabilität der Befestigungsvorrichtung 110, sodass größere Kräfte zwischen dem Handhebel 130 und dem Lenkerrohr übertragen werden können. Selbstverständlich ist diese Ausführungsform nur beispielhaft zu verstehen. In anderen Ausführungsformen können auch andere oder weitere Teile des Zylindergehäuses 10 doppelwandig ausgeführt werden.

Schließlich ist an einem Auslauf 140 des Zylindergehäuses 10 eine Hydraulikleitung 200 befestigt, welche das Hydraulikfluid bzw. den Druck vom Geber 1 zum nicht dargestellten Nehmerzylinder überträgt.

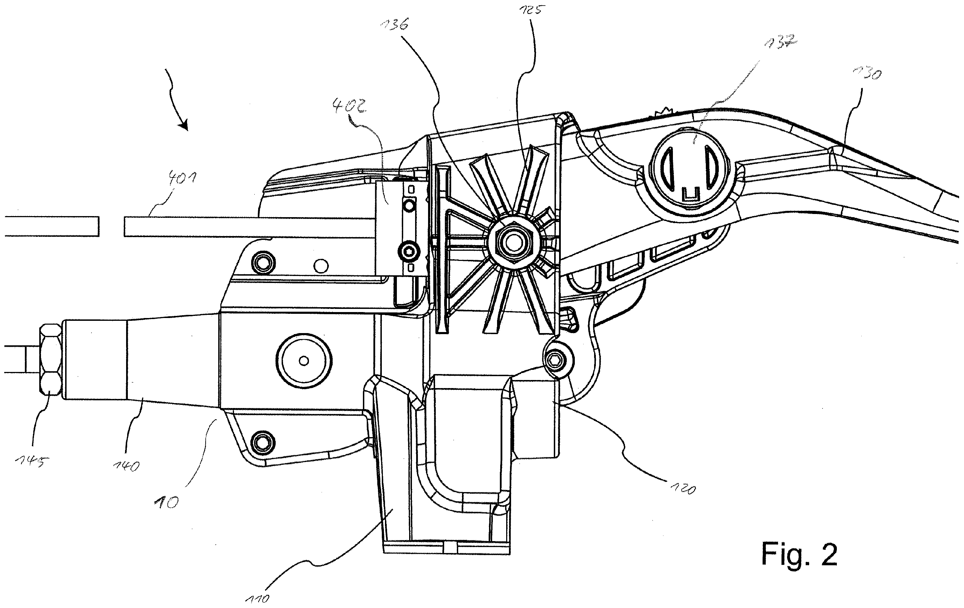

Weiterhin kann der Geber 1 einen in Figur 2 dargestellten Mikroschalter 402 enthalten, welcher an ein Kabel 401 angeschlossen ist, welches in einen Stecker 40 mündet. Der Mikroschalter kann ein elektrisches Signal bereitstellen, mit welchem zumindest eine Stellung des Handhebels 130 erfasst werden kann, sodass diese Information elektrischen bzw. elektronischen Stellgliedern des Fahrzeuges zugänglich gemacht werden kann. Die Stellglieder können eine Motorsteuerung, einen Tempomat, ein Bremslicht oder weitere Komponenten umfassen, welche hier nicht explizit genannt sind.

Schließlich ist in Figur 1 und Figur 9 ein Ausgleichsbehälter 15 erkennbar, welcher anhand der Figur 3 näher erläutert wird. Der Ausgleichsbehälter dient dazu, bei Belagverschleiß oder thermischer Ausdehnung Hydraulikfluid aufzunehmen oder an das Hydrauliksystem abzugeben.

Anhand der Figuren 1, 2 und 4 wird die Konstruktion des Schwenklagers 135 des Handhebels 130 erläutert. Figur 2 zeigt dabei die Unterseite des Zylindergehäuses 10. Figur 4 zeigt einen Schnitt durch das Zylindergehäuse entlang der in Figur 1 dargestellten Linie B-B.

Das Schwenklager 135 weist eine Schraube bzw. einen Gewindebolzen auf, welcher die Schwenkachse des Handhebels 130 definiert. Der obere Teil des Schwenklagers 135 befindet sich auf der oben angeordneten Sichtseite des Zylindergehäuses 10. Zumindest dieser Bereich ist doppelwandig ausgeführt, d.h. der Raumbereich 120 des Zylindergehäuses 10 weist eine Innenwand 121 und eine Außenwand 122 auf. Die Innenwand 121 und die Außenwand 122 sind durch zumindest einen Steg 123 miteinander verbunden. Zwischen einer Mehrzahl von Stegen 123 bilden sich Hohlräume 124. Durch die doppelwandige Konstruktion mit einer Innenwand 121, einer Außenwand 122 und Stegen 123 ergibt sich eine vergrößerte Stabilität des Zylindergehäuses 10, ohne dass die Nachteile einer großen Wandstärke zum Tragen kommen. Diese Nachteile können die unkontrollierte Ausbildung von Lunkern und/oder ein unerwünscht hohes Gewicht des Zylindergehäuses 10 sein.

Auf der Unterseite des Zylindergehäuses 10 ist das Schwenklager in einer Gewindebuchse bzw. Mutter 136 aufgenommen. Zur Erhöhung der Stabilität kann auch die Gewindebuchse 136 in einem doppelwandig ausgeführten Gehäuseteil des Zylindergehäuses 10 angeordnet sein. In anderen Ausführungsformen ist das Zylindergehäuse 10 im Bereich der Gewindebuchse 136 mit einer Verrippung 125 stabilisiert. Die Verrippung 125 kann zumindest eine Rippe oder eine Mehrzahl von Rippen umfassen. Die Verrippung 125 kann in einigen Ausführungsformen in Abhängigkeit der erwarteten oder gemessenen Kräfte dimensioniert werden. Auch durch die Verrippung 125 ergibt sich eine vergrößerte Stabilität des Zylindergehäuses 10, ohne dass die Nachteile einer großen Wandstärke zum Tragen kommen. Diese Nachteile können die unkontrollierte Ausbildung von Lunkern und/oder ein unerwünscht hohes Gewicht des Zylindergehäuses 10 sein.

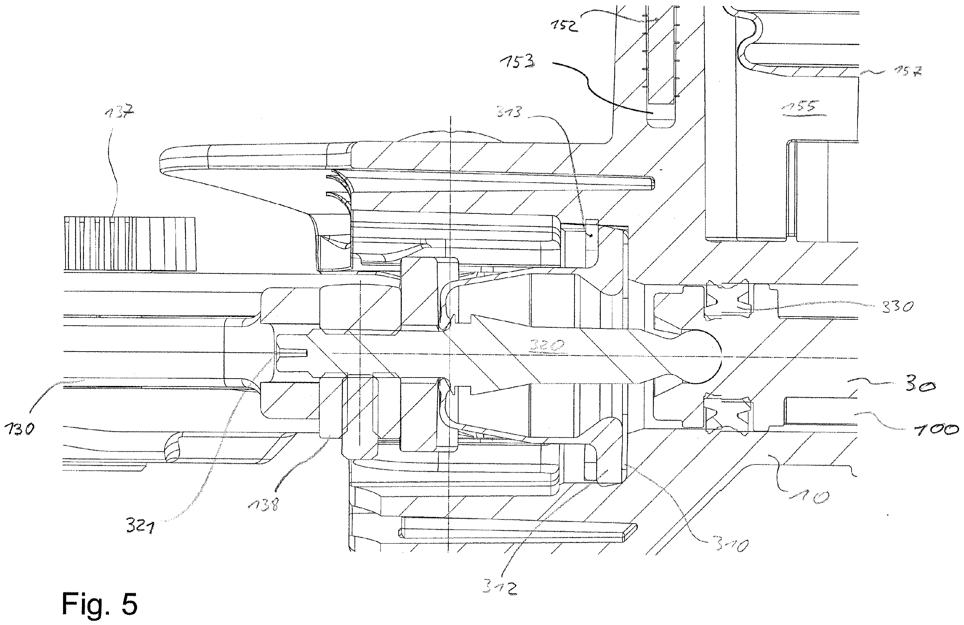

Figur 5 zeigt einen Schnitt entlang der Linie C, welche in Figur 1 dargestellt ist.

Im linken Bildteil der Figur 5 ist der Handhebel 130 und das Bedienelement 137 der Griffweitenverstellung erkennbar. Der Handhebel 130 trägt eine drehbar gelagerte Gewindebuchse 138, in welcher ein Stößel 320 mit einem Außengewinde aufgenommen ist. Die Lage des Stößels 320 in der Gewindebuchse 138 kann durch Drehen des Stößels am Werkzeugansatz 321 eingestellt werden. Hiermit kann der Abstand zwischen dem Handhebel und dem Kolben 30 eingestellt werden, so dass die Nullstellung des Nehmers justierbar ist.

Der Stößel 320 wirkt mit einem Kolben 30 zusammen, welcher in der Zylinderbohrung 100 verschiebbar gelagert ist. Um das Austreten von Hydraulikfluid aus der Zylinderbohrung 100 zu vermeiden, trägt der Kolben 30 weiterhin zumindest ein Dichtelement 330, beispielsweise eine X-Dichtung, einen O-Ring oder einen Lippendichtring.

In einigen Ausführungsformen kann der Kolben 30 mit einer Federkraft in die in Figur 5 gezeigte Ruheposition gebracht werden. Um zu verhindern, dass der Kolben 30 durch eine Feder 302 aus der Zylinderbohrung 100 vollständig ausgeschoben wird, kann der Geber 1 weiterhin ein Anschlagelement 310 aufweisen. Das Anschlagelement 310 kann beispielsweise eine runde Scheibe sein, welche die Zylinderbohrung 100 so weit verlegt, dass der Kolben 30 mit seiner Stirnseite am Anschlagelement 310 anstoßen kann. Daneben kann das Anschlagelement 310 eine zentrale Bohrung aufweisen, durch welche der Stößel 320 eingeführt werden kann.

Um eine Verschmutzung des Stößels 320, des Kolbens 30 und der Zylinderbohrung 100 bei Betrieb des Fahrzeuges zu vermeiden, kann in einigen Ausführungsformen ein Balg 312 vorgesehen sein. Der Balg 312 kann sowohl am Zylindergehäuse 10 als auch am Stößel 320 dichtend anliegen und so das Eindringen von Feuchtigkeit und Staub zumindest reduzieren oder verhindern. Der Balg 312 kann aus einem Elastomer oder einem Gummi gefertigt sein.

Um den Balg 312 und/oder das Anschlagelement 310 an der in Figur 5 gezeigten Position zu halten, kann ein Sicherungsring 313 eingesetzt werden. Der Sicherungsring 313 kann mit einer Außenklemmung im Zylindergehäuse 10 gehalten sein. Auf diese Weise wird keine zusätzliche Nut benötigt und der Sicherungsring 313 ist im Zylindergehäuse 10 frei positionierbar, sodass dieser Fertigungstoleranzen des Balges 312 und/oder des Anschlagselementes 310 ausgleichen kann.

Figur 3 zeigt einen Schnitt durch den Ausgleichsbehälter 15 entlang der Linie C. Der Ausgleichsbehälter 15 ist mit einem Ausgleichsbehälterdeckel 151 verschlossen. Zwischen dem Ausgleichsbehälterdeckel 151 und dem Ausgleichsbehälter 15 ist ein Balg 157 angeordnet. Der Balg 157 dient dazu, das Volumen des Innenraumes 155 des Ausgleichsbehälters 15 variabel zu gestalten, ohne dass sich ein Freispiegel des im Innenraum 155 befindlichen Hydraulikfluides ausbildet.

Der Balg 157 und der Ausgleichsbehälterdeckel 151 sind durch Schrauben 152 gehalten. Im dargestellten Ausführungsbeispiel werden vier Schrauben 152 verwendet. Selbstverständlich ist die Erfindung nicht auf die Verwendung von genau vier Schrauben begrenzt.

Die Schraubenbohrung 153 zumindest einer Schraube 152 steht über einem Überströmkanal 154 mit dem Innenraum 155 des Ausgleichsbehälters 15 in Verbindung. Auf diese Weise kann Hydraulikfluid aus dem Innenraum 155 in die Schraubenbohrung 153 eindringen.

Um das Hydraulikfluid zu entlüften kann das Fahrzeug bzw. der Geber 1 so geneigt werden, dass die Schraubenbohrung 153 den höchsten Punkt des Hydrauliksystems bildet. In diesem Fall werden aufsteigende Luftblasen über den Überströmkanal 154 in die Schraubenbohrung 153 eindringen. Zum Entlüften kann nun die Schraube 152 entfernt werden, sodass am Konussitz 156 ein Behälter oder eine in einen Behälter führende Leitung angesteckt werden kann, beispielsweise eine Spritze oder ein Trichter. Dieser Behälter kann mit dem Hydraulikfluid befüllt werden, sodass Lufteinschlüsse die Schraubenbohrung 153 verlassen können und das frei werdende Volumen mit nachlaufendem Hydraulikfluid befüllt wird. Wahlweise kann hierzu vom Nehmerzylinder her Hydraulikfluid nachgefüllt werden, sodass sich eine Strömung durch das Hydrauliksystem ergibt. Nachdem der Innenraum 155, die Zylinderbohrung 100, die Leitung 200 und die Schraubenbohrung 153 vollständig entlüftet sind, kann der Behälter vom Konussitz 156 wieder abgenommen werden. Schließlich wird die Schraube 152 eingesetzt, welche mit einer Dichtung 158, beispielsweise einem O-Ring, zum Ausgleichsbehälterdeckel 151 abgedichtet werden kann. Das beschriebene Verfahren der Entlüftung und der gezeigte Geber 1 erlauben somit den Wechsel des Hydraulikfluides und das Entlüften des Hydrauliksystems, ohne den Hydraulikbehälterdeckel 151 abnehmen zu müssen. Hierdurch wird der Eintrag von Feuchtigkeit, Luft oder Schmutz zuverlässig verhindert.

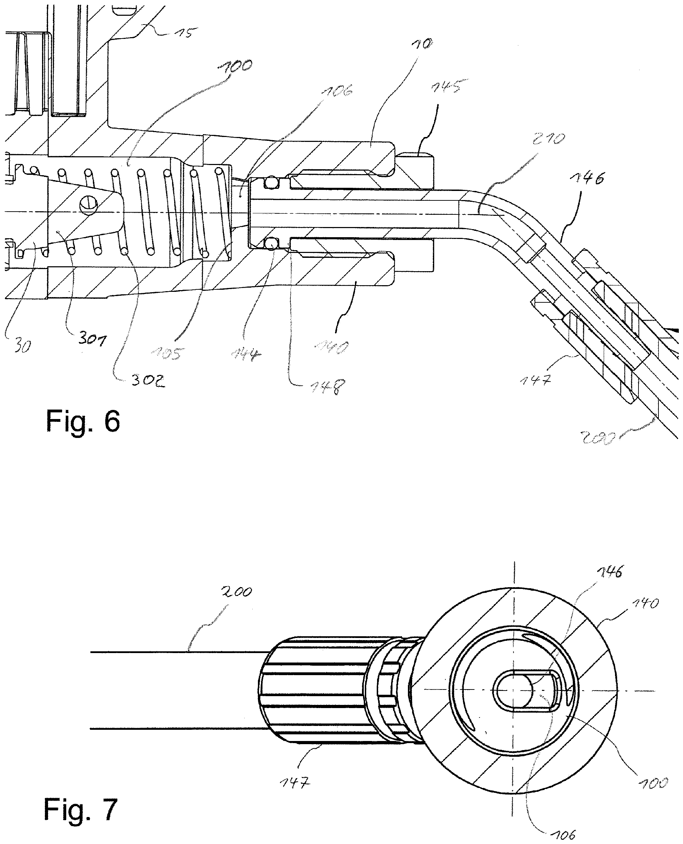

Figur 6 zeigt den Auslauf 140 des Zylindergehäuses 10. Weiterhin ist in Figur 6 ein Teil der Zylinderbohrung 100 und ein Teil des Kolbens 30 erkennbar. Die Zylinderbohrung 100 ist an ihrem Ende mit einem Zylinderboden 105 abgeschlossen. Am Zylinderboden 105 stützt sich ein optionales Federelement 302 ab, welches den Kolben 30 in seine Ruhelage bewegt, wenn keine Kraft auf den Handhebel 130 ausgeübt wird. Hierzu weist der Kolben 30 ein konisches Ende 301 auf, welches in das als Spiralfeder ausgebildete Federelement 302 eingreift.

Der Zylinderboden 105 weist ein Langloch 106 auf, durch welche das Hydraulikfluid bei Betätigung des Handhebels in ein Rohr 146 strömt, welche durch eine Überwurfmutter 147 den Anschluss zur Hydraulikleitung 200 vermittelt. Das Rohr 146 ist drehbar im Auslauf 140 des Zylindergehäuses 100 aufgenommen. Die mechanische Befestigung in axialer und radialer Richtung vermittelt eine Schraubhülse 145, an deren Stirnseite ein Überstand 148 des Rohres 146 anliegt. Der Austritt von Hydraulikfluid wird durch einen Dichtring 144 verhindert, welcher zwischen dem Rohr 146 und dem Zylindergehäuse 10 angeordnet ist. Auf diese Weise ist das Rohr 146 um die Achse 210 drehbar und dennoch flüssigkeitsdicht aufgenommen, sodass die Hydraulikleitung 200 dem Lenkeinschlag folgen kann und Torsionskräfte oder Knickbelastungen, welche die Hydraulikleitung 200 beschädigen könnten, entweder in geringerem Ausmaß auftreten oder ganz vermieden werden.

In einigen Ausführungsformen des Gebers kann das Langloch 106 aus einer Mittelposition nach oben verschoben angeordnet sein, wie anhand von Figur 7 erläutert. Figur 7 zeigt die Aufsicht auf den Zylinderboden 105 und die im Anschluss daran angeordnete Hydraulikleitung bzw. das Rohr 146. Wie aus Figur 6 und Figur 7 ersichtlich ist, ist der freie Querschnitt des Rohres 146 in etwa konzentrisch zur Zylinderbohrung 100 angeordnet. Das Langloch 106 erstreckt sich demgegenüber von der Mittelposition nach oben, sodass sich Luftblasen an der höchsten Stelle sammeln und von dort über die Zylinderbohrung 100 in den Ausgleichsbehälter 15 transportiert werden können. Auf diese Weise wird ein Lufteinschluss im Auslauf 140 vermieden, welcher zum Versagen des hydraulischen Betätigungselementes führen könnte.

Anhand von Figur 8 wird ein Detail des Befestigungselementes 110 erläutert. Das Befestigungselement 110 umfasst eine in der Figur nicht dargestellte, gekrümmte Anlagefläche, welche am Lenkerrohr des lenkergeführten Fahrzeuges anliegt. Zur mechanischen Fixierung wird eine Klemmkraft auf die Anlagefläche 111 und das Lenkerrohr ausgeübt. Hierzu dient zumindest eine Mutter 115, in welche durch eine Öffnung 116 eine Schraube bzw. eine Gewindestange eingeschraubt werden kann. Die Öffnung 116 weist einen geringeren Durchmesser auf als der Außendurchmesser der Mutter 115, sodass diese eine Haltekraft auf das Zylindergehäuse 10 abtragen kann.

In einigen Ausführungsbeispielen des Gebers kann die Mutter 115 in einem Spritzgussverfahren in das Material des Zylindergehäuses 10 eingebettet werden. Im dargestellten Ausführungsbeispiel der Figur 8 wird die Mutter 115 durch einen Schacht 117 eingeführt und in Verlängerung der Öffnung 116 positioniert. Auf diese Weise kann die Mutter 115 bei Beschädigung des Gewindes in einfacher Weise ausgetauscht werden.

Um zu verhindern, dass die Mutter 115 bei der Montage des Gebers 1 verloren geht, ist in den Schacht 117 weiterhin ein Zapfen als Verliersicherung 118 angeordnet. Die Verliersicherung 118 kann nach dem Einführen der Mutter 115 in den Schacht 117 durch Warmverformen aus der in Figur 8 dargestellten flachen Position in eine abstehende Position gebracht werden, sodass die Verliersicherung 118 den Querschnitt des Schachtes 117 zumindest teilweise verengt bzw. verjüngt. Auf diese Weise wird die Mutter 115 am Herausfallen gehindert, sodass der Geber 1 transportiert, gelagert und montiert werden kann, ohne dass die Mutter 115 verloren geht.

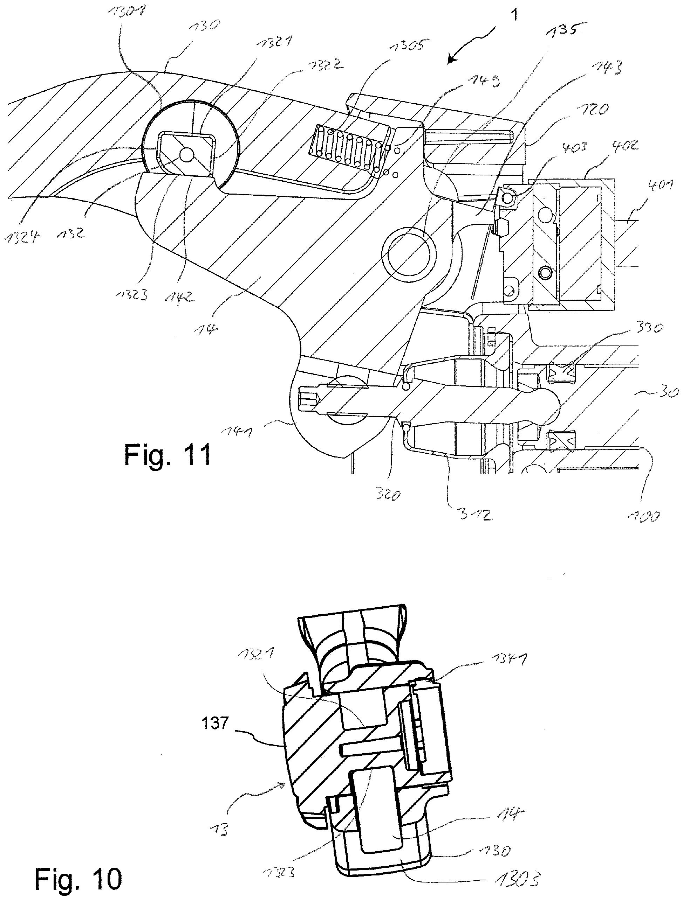

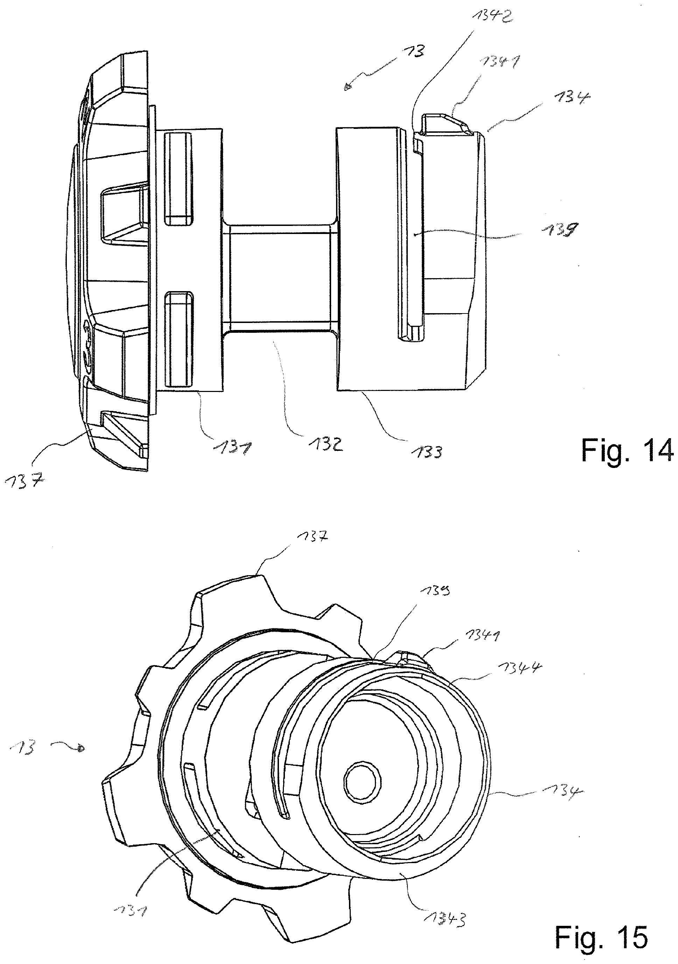

Anhand der Figuren 10 bis 15 wird die erfindungsgemäße Griffweitenverstellung erläutert. Wie anhand von Figur 11 ersichtlich ist, enthält der Geber in einer Ausführungsform der Erfindung einen Schwenkhebel 14. Der Schwenkhebel 14 ist um ein Schwenklager 135 drehbar gelagert. Das Schwenklager 135 kann zusätzlich auch den Drehpunkt des Handhebels 130 bilden. Der Schwenkhebel 14 weist eine Aufnahme 141 für den Stößel 320 auf, welcher eine Druckkraft auf den Kolben 30 überträgt.

Um das hydraulische Betätigungselement zu bedienen, d.h. den Kolben 30 von der in Figur 11 gezeigten Ruhestellung in eine Betriebsstellung zu bewegen, steht der Handhebel 130 über ein Verstellelement 13 mit dem Schwenkhebel 14 in Verbindung. Die vom Benutzer über den Handhebel 130 aufgebrachte Kraft wird über die Anlagefläche 142 in den Schwenkhebel 14 eingeleitet, so dass dieser sich um die Achse 135 dreht. Wie aus den Figuren 10, 12 und 13 ersichtlich ist, kann der Schwenkhebel 14 hierzu zumindest teilweise über einen Schlitz 1303 in den Handhebel 130 eingreifen. Bei Betätigung des Handhebels 130 kann das Schwenkelement 14 über einen optionalen Fortsatz 143 einen optionalen elektrischen Kontakt 403 bedienen, beispielsweise einen Schalter für ein Bremslicht oder eine Fahrdynamikregelung.

Unter der Griffweite wird in der vorliegenden Beschreibung der Abstand des Handhebels 130 vom Lenkerrohr verstanden. Zur Einstellung der Griffweite dient das Verstellelement 13. Der Handhebel 130 steht über das Verstellelement 13 mit dem Schwenkhebel 14 in Eingriff.

Wie anhand der Figuren 1, 14 und 15 ersichtlich ist, weist das Verstellelement 13 ein Bedienelement 137 auf, durch welches die Griffweiteneinstellung vom Benutzer des Fahrzeuges bedient wird. Weiterhin ist das Verstellelement 13 mit einem Exzenter 132 ausgestattet. Im dargestellten Ausführungsbeispiel weist der Exzenter 132 vier Anlageflächen 1321, 1322, 1323 und 1324 auf. Jede der vier Anlageflächen weist einen unterschiedlichen Abstand zur Drehachse des Verstellelementes 13 auf, um auf diese Weise durch Drehen des Verstellelementes am Bedienelement 137 einen unterschiedlichen Abstand zwischen dieser Drehachse und der Anlagefläche 142 des Schwenkhebels 14 zu verwirklichen. Um einen zuverlässigen mechanischen Kontakt zwischen der Anlagefläche 142 und dem Exzenter 132 zu gewährleisten, steht eine Druckfeder 1305 zur Verfügung, welche zwischen dem Handhebel 130 und der Anlagefläche 149 des Schwenkhebels 14 eine Kraft erzeugt.

Wie die Figuren 10, 11, 12 und 14 zeigen, ist das Verstellelement 13 im Handhebel 130 in einer Bohrung 1301 aufgenommen. Hierbei ist das Verstellelement 13 mit seinen Längsabschnitten 133 und 131 so in der Bohrung 1301 geführt, dass das Verstellelement 13 nicht verkantet und am Bedienelement 137 leicht gedreht werden kann. Beim Drehen des Verstellelementes 13 kommt jeweils eine andere Anlagefläche 1321, 1322, 1323 oder 1324 des Exzenters 132 mit der Anlagefläche 142 in Kontakt, so dass sich der Abstand des Handhebels 130 vom Griffrohr ändert.

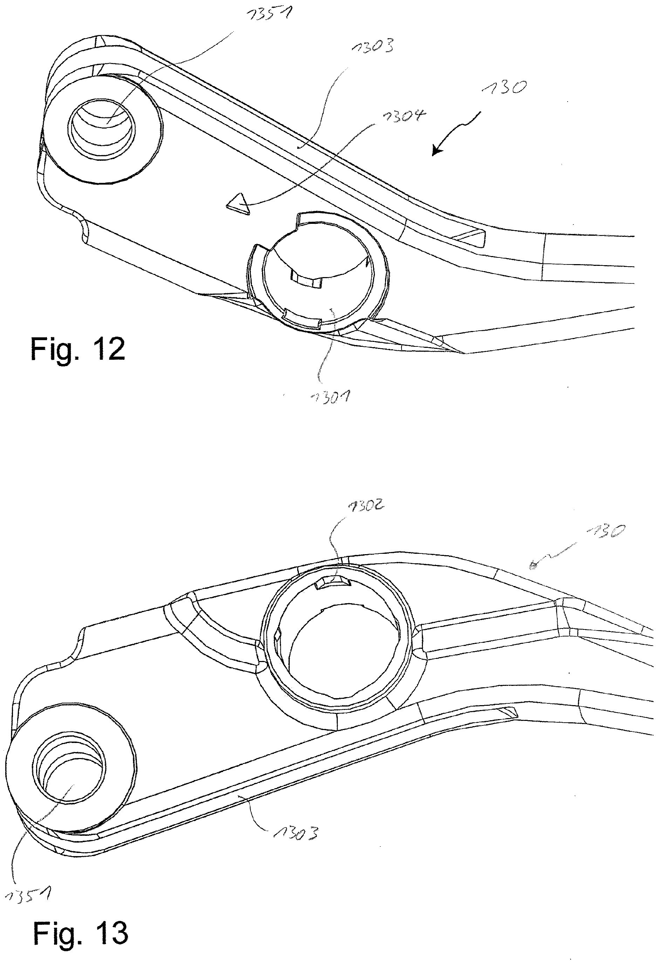

Wie aus den Figuren 12, 13, 15 und 15 ersichtlich ist, können in der Wandung der Bohrung 1301 Ausnehmungen 1302 angeordnet sein, um ein unbeabsichtiges Verstellen während der Fahrt zu verhindern. In diese Ausnehmungen 1302 kann eine Rastnase 1341 eingreifen, so dass das Verstellelement 13 in der jeweiligen Position festgehalten wird. Um ein Verdrehen des Verstellelementes 13 in der Bohrung 1301 zu ermöglichen, ist die Rastnase 1341 federnd am Rastelement 134 aufgenommen, so dass die Rastnase radial nach innen bewegt werden kann, um von einer Ausnehmung 1302 zur nächsten Ausnehmung weiter gedreht zu werden.

In einigen Ausführungsformen der Erfindung kann das Verstellelement 13 einstückig aus einem Kunststoffmaterial gefertigt sein. In diesem Fall kann das Rastelement 134 durch einen Schlitz 139 vom Längsabschnitt 133 freigestellt sein. Somit dient der Längsabschnitt 133 einerseits der Führung des Verstellelementes 13 in der Bohrung 1301 und andererseits trägt dieser das elastische Rastelement 134. Die Elastizität bzw. der Widerstand gegen Verformung des Rastelementes 134 kann durch dessen Wandstärke eingestellt werden. Beispielsweise kann das Rastelement 134 einen radialen Abschnitt geringer Wandstärke 1344 und einen radialen Abschnitt größerer Wandstärke 1343 aufweisen. Beide Abschnitte können kontinuierlich oder stufenweise ineinander übergehen.

Um eine Beschädigung des Rastelementes 134 bei der Montage des Verstellelementes 13 in der Bohrung 1301 zu vermeiden, kann im Schlitz 139 ein Anschlagelement 1342 angebracht sein, welcher eine Überdehnung des Rastelementes 134 bei axialer Belastung verhindert. Ein solchermaßen ausgestaltetes Verstellelement kann beispielsweise in einem Spritzgussverfahren rasch und kostengünstig in großen Stückzahlen hergestellt werden.

Selbstverständlich ist das dargestellte Lösungsprinzip aus Ausnehmungen 1302 und einer Rastnase 1341 auch einer kinematischen Umkehr zugänglich, so dass sich Ausnehmungen 1302 am Verstellelement 13 befinden und Rastnasen 1341 am Handhebel 130.

Selbstverständlich erlaubt das in der vorstehenden Beschreibung offenbarte Lösungsprinzip auch Abwandlungen, ohne den allgemeinen Erfindungsgedanken zu verlassen. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die Beschreibung "erste", "zweite" und "dritte" Merkmale definieren, so dient diese Bezeichnung der Unterscheidung gleichartiger Merkmale, ohne eine Rangfolge festzulegen.

## Patentansprüche

1. Geber (1) für ein hydraulisches Betätigungselement, mit einem Handhebel (130) und einem Schwenkhebel (14) und einer Zylinderbohrung (100), welche in einem Zylindergehäuse (10) ausgebildet ist und in welcher ein Kolben (30) verschiebbar gelagert ist, wobei der Handhebel (130) mit dem Schwenkhebel (14) über ein Verstellelement (13) in Kontakt steht, welches einen Exzenter (132) aufweist und der Schwenkhebel (14) dazu eingerichtet ist, eine Bewegung des Handhebels (130) auf den Kolben (30) zu übertragen,
**dadurch gekennzeichnet, dass**
das Verstellelement (13) aus einem Kunststoffmaterial gefertigt ist und weiterhin ein Rastelement (134) aufweist, wobei das Verstellelement (13) in einer Bohrung (1301) im Handhebel (130) aufgenommen ist und wobei das Rastelement (134) zumindest eine über den Umfang des Verstellelementes hinausragende Rastnase (1341) aufweist, welche dazu ausgebildet ist, in eine Ausnehmung (1302) am Handhebel (130) einzugreifen, so dass das Verstellelement (13) in unterschiedlichen Stellungen festlegbar ist.

2. Geber nach Anspruch 1, **dadurch gekennzeichnet, dass** der Excenter (132) vier Anlageflächen (1321, 1322, 1323, 1324) aufweist, welche jeweils einen unterschiedlichen Abstand zu einer Drehachse des Verstellelements (13) aufweisen.

3. Geber nach Anspruch 1 oder 2, **dadurch gekennzeichnet, dass** das Verstellelement (13) weiterhin ein Bedienelement (137) aufweist, welches dazu eingerichtet ist, den Exzenter (132) und das Rastelement (134) zu drehen

4. Geber nach einem der Ansprüche 1 bis 3, **dadurch gekennzeichnet, dass** das Verstellelement (13) einstückig gefertigt ist.

5. Geber nach einem der Ansprüche 1 bis 4, **dadurch gekennzeichnet, dass** das Verstellelement (13) in einem Spritzgußverfahren gefertigt ist.

6. Geber nach einem der Ansprüche 1 bis 5, **dadurch gekennzeichnet, dass** die Rastnase (1341) federnd am Rastelement (134) aufgenommen ist, so dass diese radial nach innen bewegt werden kann.

7. Geber nach einem der Ansprüche 1 bis 6, **dadurch gekennzeichnet, dass** zumindest ein Teil des Rastelementes (134) aus einem zylindrischen Längsabschnitt des Verstellelementes (13) gebildet ist, welcher durch einen Schlitz (139) von einem Längsabschnitt (133) des Verstellelement (13) freigestellt ist.

8. Geber nach Anspruch 7, **dadurch gekennzeichnet, dass** im Schlitz (139) ein Anschlagelement (1342) angeordnet ist.

9. Geber nach einem der Ansprüche 1 bis 8, **dadurch gekennzeichnet, dass** das Rastelement (134) eine radial veränderliche Wandstärke (1343, 1344) aufweist.

10. Geber nach einem der Ansprüche 1 bis 9, **dadurch gekennzeichnet, dass** das Zylindergehäuse (10) aus einem Kunststoffmaterial gefertigt ist.

11. Bremse oder Kupplung mit einem Geber (1) nach einem der Ansprüche 1 bis 10.

12. Motorrad oder Schneemobil oder Quad mit einem Geber (1) nach einem der Ansprüche 1 bis 10.

## Claims

1. Transmitter (1) for a hydraulic actuation element, comprising a hand lever (130) and a pivot lever (14) and a cylinder bore (100), which is formed in a cylinder housing (10) and in which a piston (30) is slidably mounted, the hand lever (130) being in contact with the pivot lever (14) via an adjustment element (13), which has an eccentric (132), and the pivot lever (14) being configured to transmit a movement of the hand lever (130) to the piston (30),
**characterized in that**
the adjustment element (13) is made of a plastic material and furthermore has a detent element (134), the adjustment element (13) being received in a bore (1301) in the hand lever (130) and the detent element (134) having at least one detent lug (1341) which protrudes beyond the circumference of the adjustment element and is designed to engage in a recess (1302) at the hand lever (130) in such a way that the adjustment element (13) can be fixed in different positions.

2. Transmitter according to claim 1, **characterized in that** the eccentric (132) has four contact surfaces (1321, 1322, 1323, 1324), each having a different distance from an axis of rotation of the adjustment element (13).

3. Transmitter according to claim 1 or 2, **characterized in that** the adjustment element (13) furthermore has an operating element (137), which is configured to rotate the eccentric (132) and the detent element (134).

4. Transmitter according to any of claims 1 to 3, **characterized in that** the adjustment element (13) is made as one piece.

5. Transmitter according to any of claims 1 to 4, **characterized in that** the adjustment element (13) is made by means of injection molding.

6. Transmitter according to any of claims 1 to 5, **characterized in that** the detent lug (1341) is resiliently supported on the detent element (134) such that it can be moved radially inwards.

7. Transmitter according to any of claims 1 to 6, **characterized in that** at least part of the detent element (134) is formed from a cylindrical longitudinal portion of the adjustment element (13) which is released from a longitudinal portion (133) of the adjustment element (13) by a slot (139).

8. Transmitter according to claim 7, **characterized in that** a stop element (1342) is arranged in the slot (139).

9. Transmitter according to any of claims 1 to 8, **characterized in that** the detent element (134) has a radially variable wall thickness (1343, 1344).

10. Transmitter according to any of claims 1 to 9, **characterized in that** the cylinder housing (10) is made of a plastic material.

11. Brake or coupling including a transmitter (1) according to any of claims 1 to 10.

12. Motorcycle or snowmobile or quad having a transmitter (1) according to any of claims 1 to 10.

## Revendications

1. Émetteur (1) pour un élément d'actionnement hydraulique, comportant un levier à main (130) et un levier pivotant (14) et un perçage de cylindre (100) qui est ménagé dans un carter de cylindre (10) et dans lequel un piston (30) est monté mobile en translation, le levier à main (130) étant en contact avec le levier pivotant (14) par un élément de déplacement (13) qui comprend un excentrique (132) et le levier pivotant (14) est conçu pour transmettre un mouvement du levier à main (130) au piston (30),
**caractérisé en ce que**
l'élément de déplacement (13) est fabriqué en une matière plastique et comprend en outre un élément d'enclenchement (134), l'élément de déplacement (13) étant reçu dans un perçage (1301) dans le levier à main (130) et l'élément d'enclenchement (134) comprenant au moins un bec d'enclenchement (1341) qui fait saillie au-delà de la périphérie de l'élément de déplacement et qui est réalisé pour venir s'engager dans un évidement (1302) sur le levier à main (130), de telle sorte que l'élément de déplacement (13) est immobilisable dans différentes positions.

2. Émetteur selon la revendication 1, **caractérisé en ce que** l'excentrique (132) comprend quatre surfaces d'appui (1321, 1322, 1323, 1324) qui présentent chacune une distance différente d'un axe de rotation de l'élément de déplacement (13).

3. Émetteur selon la revendication 1 ou 2, **caractérisé en ce que** l'élément de déplacement (13) comprend en outre un élément de manoeuvre (137) qui est conçu pour faire tourner l'excentrique (132) et l'élément d'enclenchement (134).

4. Émetteur selon l'une des revendications 1 à 3, **caractérisé en ce que** l'élément de déplacement (13) est fabriqué d'un seul tenant.

5. Émetteur selon l'une des revendications 1 à 4, **caractérisé en ce que** l'élément de déplacement (13) est fabriqué dans un procédé de coulée par injection.

6. Émetteur selon l'une des revendications 1 à 5, **caractérisé en ce que** le bec d'enclenchement (1341) est reçu de façon élastique sur l'élément d'enclenchement (134), de sorte que celui-ci peut être déplacé radialement vers l'intérieur.

7. Émetteur selon l'une des revendications 1 à 6, **caractérisé en ce que** une partie au moins de l'élément d'enclenchement (134) est formée par une portion allongée cylindrique de l'élément de déplacement (13), qui est libérée d'une portion allongée (133) de l'élément de déplacement (13) à travers une fente (139).

8. Émetteur selon la revendication 7, **caractérisé en ce qu'**un élément de butée (1342) est agencé dans la fente (139).

9. Émetteur selon l'une des revendications 1 à 8, **caractérisé en ce que** l'élément d'enclenchement (134) présente une épaisseur de paroi (1343, 1344) radialement variable.

10. Émetteur selon l'une des revendications 1 à 9, **caractérisé en ce que** le carter de cylindre (10) est fabriqué en une matière plastique.

11. Frein ou embrayage pourvu d'un émetteur (1) selon l'une des revendications 1 à 10.

12. Motocyclette ou motoneige ou quad pourvu(e) d'un émetteur (1) selon l'une des revendications 1 à 10.
